(19) Europäisches Patentamt / European Patent Office / Office européen des brevets

(11) **EP 2 826 969 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
*F01N 3/023* *(2006.01)*       *F01N 9/00* *(2006.01)*

(21) Anmeldenummer: **14000412.8**

(22) Anmeldetag: **05.02.2014**

(54) **Verfahren zur Regeneration eines Partikelfilters und Brennkraftmaschine mit Partikelfilter**

Method for regenerating a particle filter and internal combustion engine with a particle filter

Procédé de régénération d'un filtre à particules et moteur à combustion interne doté d'un filtre à particules

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.07.2013 DE 102013011806**

(43) Veröffentlichungstag der Anmeldung:
**21.01.2015 Patentblatt 2015/04**

(73) Patentinhaber: **MAN Truck & Bus AG**
**80995 München (DE)**

(72) Erfinder:
• **Knauer, Markus**
**90592 Schwarzenbruck (DE)**
• **Rothe, Dieter**
**90403 Nürnberg (DE)**
• **Pastötter, Christian**
**90429 Nürnberg (DE)**

(74) Vertreter: **Liebl, Thomas et al**
**Neubauer - Liebl - Bierschneider**
**Patentanwälte**
**Münchener Straße 49**
**85051 Ingolstadt (DE)**

(56) Entgegenhaltungen:
**JP-A- 2010 101 205**

• **FIEBIG M ET AL: "Einflüsse motorischer Betriebsparameter auf die Reaktivität von Dieselruss", MTZ - MOTORTECHNISCHE ZEITSCHRIFT,, Bd. 71, Nr. 7-08/2010, 25. Juni 2010 (2010-06-25), Seiten 524-531, XP002602172,**

**Beschreibung**

Die Erfindung betrifft ein Verfahren zur Regeneration eines Partikelfilters gemäß dem Oberbegriff des Patentanspruchs 1 sowie eine Brennkraftmaschine mit einem Partikelfilter zur Durchführung des Verfahrens gemäß dem Patentanspruch 9.

Eine Abgasreinigungseinrichtung eines Dieselmotors umfasst regelmäßig einen Partikelfilter, in welchem Rußpartikel, die bei der Verbrennung des Kraftstoffs einstehen und sich im Abgasstrom befinden daran gehindert werden, in die Umwelt zu gelangen. Mit zunehmender Betriebsdauer wird der Partikelfilter immer stärker mit Rußpartikeln beladen und muss zur Aufrechterhaltung seiner Wirksamkeit regeneriert werden. Hierzu sind Regenerationsphasen vorgesehen, innerhalb derer die Rußpartikel abgebrannt werden. Dem Abgasstrom wird zu diesem Zweck üblicherweise vor einem vorhandenen Dieseloxidationskatalysator Kraftstoff zugeführt, sodass im Dieseloxidationskatalysator es zu einer Reaktion und einer damit verbunden Temperaturerhöhung des Abgasstroms kommt. Der in seiner Temperatur erhöhte heiße Abgasstrom bewirkt dann das Abbrennen der Rußpartikel im Partikelfilter.

Das Abbrennen der Rußpartikel ist von der Reaktivität der im Partikelfilter abgelagerten Rußpartikel abhängig, sodass entsprechend höhere oder niedrigere Abgastemperaturen zum Abbrennen der Rußpartikel verwendet werden können. Auch die Häufigkeit der Regenerationsintervalle kann in Abhängigkeit von der Rußmenge und der Rußbeschaffenheit der im Partikelfilter abgelagerten Rußpartikel festgelegt werden.

Aus der DE 10 2005 046 830 A1 ist ein Verfahren zum Betrieb einer Brennkraftmaschine mit einem Partikelfilter bekannt, bei dem die Kraftstoffverbrennung in der Brennkraftmaschine so beeinflusst wird, dass unvollständig graphitisierte Rußpartikel im Partikelfilter abgelagert werden. Durch eine Temperaturerhöhung des Abgasstroms können diese Rußpartikel dann zur Einleitung einer Regenerationsphase gezündet werden.

Der MTZ-Artikel von Feibig M. et. al: "Einflüsse motorischer Betriebsparameter auf die Reaktivität von Dieselruss", MTZ- Motortechnische Zeitschrift, Bd. 71, Nr. 7-08/2010, 25. Juni 2010 (2010-06-25, Seiten 524 bis 531 beschreiben eine Untersuchung der Reaktivität von Ruß einer brennkraftmaschine. Ferner wird aus diesen Erkenntnissen eine sogenannten "alternativen DPF-Retgenerationsstrategie" angewandt. Durch aktive Veränderung der Motorbetriebsparameter wird die Partikelrohemission mit hohen Reaktivitätsunterschieden eingestellt.

Der Erfindung liegt die Aufgabe zugrunde, ein Verfahren zur Regeneration eines Partikelfilters einer Brennkraftmaschine anzugeben, bei dem die in Abhängigkeit von unterschiedlichen Betriebszuständen sich ergebenden Rußablagerungen bezüglich ihrer Beschaffenheit und/oder Menge berücksichtigt werden können.

Die Lösung dieser Aufgabe erhält man mit den im Patentanspruch 1 angegebenen Merkmalen. Besonders vorteilhafte Weiterbildungen des erfindungsgemäßen Verfahrens sind in den Unteransprüchen 2 bis 9 offenbart.

Gemäß dem kennzeichnenden Teil des Patentanspruchs 1 ist vorgesehen, dass während des Betriebs der Brennkraftmaschine die Reaktivität der Rußablagerungen anhand eines Kennfeldes bestimmt wird. Dieses Kennfeld ist bevorzugt zuvor empirisch für unterschiedliche Motorbetriebsbereiche der Brennkraftmaschine ermittelt worden, könnte jedoch gegebenenfalls alternativ oder zusätzlich auch während definierter Betriebsphasen der Brennkraftmaschine, insbesondere anhand bestimmter errechneter und/oder erfasster Betriebsparameter der Brennkraftmaschine, ermittelt werden. Die bevorzugte empirische Ermittlung der Beschaffenheit der Rußablagerungen im Partikelfilter kann zum Beispiel an einem Motorprüfstand und mit entsprechenden Laboruntersuchungen der Rußablagerungen im Partikelfilter durchgeführt werden. Dabei kann beispielsweise untersucht werden, welche Beschaffenheit die Rußablagerungen bei Volllast oder bei vorgegebenen unterschiedlichen Teillastbereichen haben. Die abgelagerten Rußbestandteile können labortechnisch bezüglich ihrer Reaktivität untersucht werden. Außerdem besteht die Möglichkeit, die Reaktivität der abgelagerten Rußpartikel dadurch zu ermitteln, dass der Abgasstrom nach eine bestimmten Betriebsdauer auf eine höhere Abgastemperatur gebracht wird, bis ein Zünden der Rußpartikel auftritt. Anhand der dabei vorhandenen Abgastemperatur kann auf die Reaktivität der abgelagerten Rußpartikel geschlossen werden.

Generell kann die Rußreaktivität unterteilt werden in hochreaktiv (Temperatur T kleiner oder gleich 550°C), reaktiv (Temperatur T größer 550°C bis kleiner gleich 600°C) und niedrig bzw. schwach reaktiv (Temperatur T über 600°C), wobei T als die Temperatur des maximalen Abbrandes in einer Atmosphäre mit 5% Sauerstoff definiert ist. Die vorstehenden und nachfolgenden Angaben zu dem Grad der Reaktivität des Rußes beziehen sich bevorzugt jeweils auf diese Definition der Rußreaktivität.

Sind für unterschiedliche Motorbetriebsbereiche die Reaktivitätswert der Rußablagerungen in einem Kennfeld abgelegt, so kann im normalen Betrieb fortlaufend sehr einfach ermittelt werden, welche Reaktivität die im Partikelfilter abgelagerten Rußpartikel haben. Durch die Kenntnis der Reaktivität der abgelagerten Rußpartikel kann zur Einleitung einer Regenerationsphase eine gezielte und insbesondere auf die Reaktivität der abgelagerten Rußpartikel abgestimmte Temperaturerhöhung des Abgasstroms vorgenommen werden. Dabei kann insbesondere vermieden werden, eine unnötig hohe Abgastemperatur zur Einleitung der Regenerationsphase vorzunehmen, wodurch eine unnötig große Kraftstoffzufuhr zur Abgaserhöhung vermieden werden kann.

Bei Erreichen einer vorgegebenen maximalen Rußmenge im Partikelfilter, was auch als Rußbeladung bezeichnet werden kann, wird durch eine Erhöhung der Abgastemperatur eine Regenerationsphase eingeleitet. Dabei kann jedoch auch berücksichtigt werden, welche Reaktivität die abgelagerten Rußpartikel haben, da es bei einem teilgefüllten Partikelfilter mit einer definiert großen Menge an reaktiven bzw. hochreaktiven Ruß sinnvoll ist, eine zusätzliche Regeneration bei einer definiert vorgegebenen niedrigen Abgastemperatur durchzuführen. Bevorzugt beträgt die niedrige Abgastemperatur maximal 450°C, höchst bevorzugt zwischen 250°C und 450°C. Diese Maßnahme trägt auch zur Optimierung der Regenerationsphasen bei.

Bei einem voll gefüllten Partikelfilter mit Ruß schwacher bzw. niedriger Reaktivität muss dagegen eine Regeneration bei einer definiert vorgegebenen hohen Abgastemperatur, bevorzugt bei einer hohen Abgastemperatur von größer 450°C, höchst bevorzugt bei einer hohen Abgastemperatur von 450°C bis 600°C, durchgeführt werden, was einen entsprechenden Mehreinsatz von Kraftstoff erfordert.

Dagegen kann bei einem voll gefüllten Partikelfilter mit reaktivem Ruß oder mit einer hohen Reaktivität des abgelagerten Rußes eine Regeneration bei niedriger Abgastemperatur durchgeführt werden. Bevorzugt beträgt die niedrige Abgastemperatur maximal 450°C, höchst bevorzugt zwischen 250°C und 450°C.

Durch die Anpassung der Abgastemperatur an die vorhandene Reaktivität des abgelagerten Rußes ist eine optimale Anpassung der Abgastemperatur zur Durchführung der Regenerationsphasen möglich, wodurch der hierfür zusätzlich erforderliche Kraftstoffeinsatz auf die jeweils notwendige Kraftstoffmenge beschränkt werden kann. Die Prozesstemperatur kann durch eine gezielte Kraftstoffzufuhr in den Abgasstrom gesteuert werden.

Eine Weiterbildung der Erfindung sieht vor, dass während zusätzlicher Beeinflussungsphasen ein gezielter Rußeintrag mit Ruß hoher Reaktivität in den Partikelfilter erfolgt. Die zusätzlichen Beeinflussungsphasen können dabei anhand der erfindungsgemäß festgestellten Reaktivität der Rußablagerungen festgelegt werden. Befindet sich im Partikelfilter eine Rußablagerung mit hoher Reaktivität, kann auf eine zusätzliche Beeinflussungsphase verzichtet werden. Dagegen kann es sinnvoll sein, eine entsprechende zusätzliche Beeinflussungsphase anzuwenden, wenn im Partikelfilter Ruß mit sehr niedriger Reaktivität abgelagert ist und der Partikelfilter sich dem vollen Beladungszustand nähert. Eine zusätzliche Beeinflussungsphase kann dann einen Rußeintrag in den Partikelfilter mit hoher Reaktivität erreichen, um damit eine nachfolgende Regenerationsphase günstig zu beeinflussen.

Der Erfindung liegt die weitere Aufgabe zugrunde, eine Brennkraftmaschine mit einem Partikelfilter anzugeben, mit der das erfindungsgemäße Verfahren zur Regeneration eines Partikelfilters durchführbar ist.

Die Lösung dieser Aufgabe wird mit den Merkmalen des Patentanspruchs 10 erhalten. Besonders vorteilhafte Weiterbildungen der erfindungsgemäßen Brennkraftmaschine sind in den Unteransprüchen 11 und 12 offenbart.

Gemäß dem Kennzeichnenden Teil des Patentanspruchs 10 besitzt die Brennkraftmaschine eine Steuerung, die den Rußeintrag in den Partikelfilter überwacht und mit einem Kennfeldspeicher, in dem ein die Rußreaktivität der Rußbeladung im Partikelfilter kennzeichnendes Kennfeld abgelegt ist, verbunden ist. Die Steuerung bestimmt den Zeitpunkt und die Temperatur für eine durchzuführende Regenerationsphase. Anhand der Kennfelddaten kann in Abhängigkeit vom laufenden Motorbetrieb der Rußeintrag bezüglich seiner Reaktivität bewertet werden. Die Steuerung kann Teil einer ohnehin vorhandenen Steuerungseinrichtung sein, die zur Steuerung des Abgasreinigungssystems vorhanden ist. Damit lässt sich auf verhältnismäßig einfache Weise das erfindungsgemäße Verfahren unter Berücksichtigung von Kennfelddaten durchführen.

Die Steuerung kann auch innerhalb einer Beeinflussungsphase anhand der Reaktivität des abgelagerten Rußes im Partikelfilter festlegen, wann und wie intensiv eine Beeinflussungsphase durchzuführen ist.

Die Brennkraftmaschine ist vorzugsweise als Antriebsmotor in einem Kraftfahrzeug angeordnet, sodass mit dem erfindungsgemäßen Verfahren eine Optimierung des Betrieb einer Abgasreinigungsanlage bezüglich der erforderlichen Regenerationsphasen möglich ist. Damit wird sowohl eine Kraftstoffersparnis als auch eine Reduzierung von Umweltbelastungen erreicht.

Die Erfindung wird nachfolgend anhand von in der Zeichnung dargestellten Ausführungsbeispielen näher erläutert.

Es zeigen:

Figur 1 bis Figur 4     unterschiedliche Kennlinien der Rußreaktivität in Abhängigkeit von unterschiedlichen Betriebsparametern der Brennkraftmaschine,

Figur 5     ein Ablaufdiagramm zur Durchführung von Regenerationsphasen und

Figur 6     ein Blockschaltbild einer Brennkraftmaschine mit einem Dieseloxidationskatalysator und einem Partikelfilter.

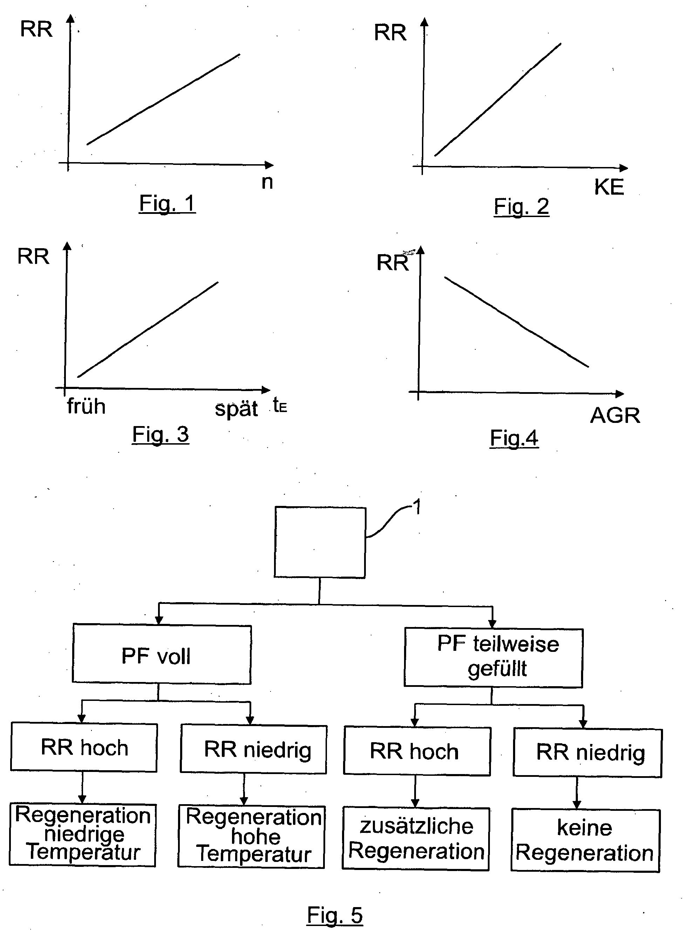

Die in Figur 1 dargestellte Kennlinie zeigt vereinfacht den Verlauf der Rußreaktivität RR in Abhängigkeit von der Motordrehzahl n einer Brennkraftmaschine. Die Rußreaktivität RR ist dabei ein Maß für die Reaktionsfähigkeit des Rußes, der von einer Brennkraftmaschine erzeugt und in einem Partikelfilter eingelagert wird. Ein Ruß mit hoher Reaktivität RR benötigt eine geringere Aktivierungsenergie als ein Ruß mit niedriger Reaktivität. Dabei ist die Aktivierungsenergie die Energie, die aufgebracht werden muss, um eine Reaktion auszulösen, was im vorliegenden Fall für die Einleitung einer Regenerationsphase im Partikelfilter wesentlich ist.

Wird eine Brennkraftmaschine mit hoher Drehzahl n betrieben, so hat dies einen günstigen Einfluss auf die Rußreaktivität. Die in Figur 2 dargestellte Kennlinie zeigt den Verlauf der Rußreaktivität RR in Abhängigkeit von der Kraftstoffeinspritzmenge KE. Die Kennlinie von Figur 3 zeigt die Rußreaktivität RR in Abhängigkeit vom Einspritzzeitpunkt $t_E$, wobei die Rußreaktivität bei frühem Einspritzzeitpunkt niedrig und bei spätem Einspritzzeitpunkt hoch ist.

Die Kennlinie von Figur 4 betrifft die Abgasrückführungsrate AGR der Brennkraftmaschine, wonach mit zunehmend höherer Abgasrückführungsrate AGR die Rußreaktivität RR abnimmt.

Die Kennlinien von Figur 1 bis Figur 4 sowie weitere von Motorbetriebsparametern abhängige Kennlinien können für eine bestimmte Brennkraftmaschine an einem Motorprüfstand ermittelt werden. Als weiterer Betriebsparameter einer Brennkraftmaschine kann der Druck im Druckspeicher eines Common-Rail-Systems berücksichtigt werden, wobei hier die Rußreaktivität mit zunehmendem Raildruck ebenfalls zunimmt.

Die unterschiedlichen Abhängigkeiten der Rußreaktivität RR von den verschiedenen Motorbetriebsparametern können in einem motorspezifischen Kennfeld eingetragen werden, sodass dieses Kennfeld dann im normalen Betrieb der Brennkraftmaschine zur Bestimmung der Rußreaktivität des im Partikelfilter abgelegten Rußes herangezogen werden kann. Die Rußreaktivität RR kann entsprechend der nachfolgenden Gleichung beschrieben werden:

$$RR = a \cdot P + b \cdot KE + c \cdot AGR + d \cdot n + e \cdot t_E + \ldots$$

Die Faktoren a, b, c, d, e dienen zur Bewertung der einzelnen Betriebsparameter an der gesamten Rußreaktivität RR des im Partikelfilter abgelagerten Rußes. Anhand von Messungen an einem Motorprüfstand können diese Faktoren den einzelnen Betriebsparametern zugeordnet werden, sodass eine exakte Aussage über die Reaktivität des im Rußpartikelfilter abgelagerten Rußes in Abhängigkeit von unterschiedlichen Betriebsbereichen einer Brennkraftmaschine möglich ist.

Das Ablaufdiagramm von Figur 5 zeigt unterschiedliche Vorgehensweisen in Abhängigkeit von unterschiedlichen Rußreaktivitäten. Zunächst befindet sich die Brennkraftmaschine 1 im normalen Motorbetrieb, wobei unterschiedliche Betriebsbereiche über einen längeren Zeitraum durchlaufen werden. Mittels einer an sich bekannten fortlaufenden Messung der Druckdifferenz am Eingang und am Ausgang des Partikelfilters kann eine Aussage darüber getroffen werden, wie viel Ruß im Partikelfilter PF abgelagert ist. Wird dabei festgestellt, dass der Partikelfilter PF teilweise gefüllt ist, kann weiterhin in Abhängigkeit von der Reaktivität des Rußes entschieden werden, ob keine Regeneration erfolgen soll oder ob eine zusätzliche Regeneration bei niedriger Temperatur durchzuführen ist. Im Ablaufdiagramm von Figur 5 erfolgt bei teilweise gefülltem Partikelfilter PF nur dann eine zusätzliche Regeneration, wenn der abgelagerte Ruß eine hohe Rußreaktivität hat.

Im linken Teil des Ablaufdiagramms von Figur 5 ist der Fall angegeben, wenn der Partikelfilter PF voll ist. Wird im nachfolgenden Schritt festgestellt, dass Ruß mit hoher Reaktivität im Partikelfilter abgelagert ist, so wird eine Regeneration bei niedriger Temperatur durchgeführt. Wird dagegen festgestellt, dass der im Partikelfilter abgelagerte Ruß nur eine geringe Reaktivität besitzt, erfolgt eine Regeneration bei hoher Temperatur, was eine entsprechend hohe Kraftstoffzufuhr in den Abgasstrom vor dem Dieseloxidationskatalysator erfordert.

Das Ablaufdiagramm von Figur 5 zeigt nur eine Teilauswahl von Vorgehensweisen bei der Einleitung und Durchführung von Regenerationsphasen.

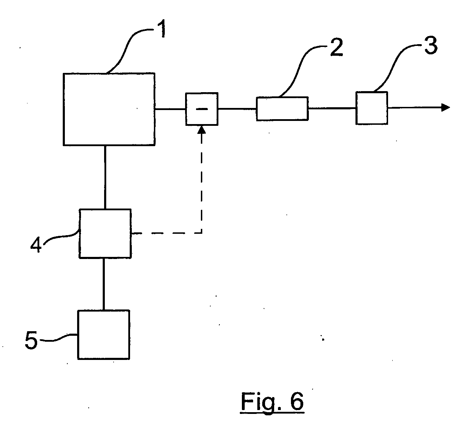

Figur 6 zeigt ein vereinfacht dargestelltes Blockschaltbild einer Brennkraftmaschine 1 mit einem Dieseloxidationskatalysator 2 und einem Partikelfilter 3 des Abgasreinigungssystems der Brennkraftmaschine 1. Die Richtung des Abgasstroms ist mit einem Pfeil angegeben. Eine der Brennkraftmaschine 1 zugeordnete Steuerung 4 ist mit einem Kennfeldspeicher 5 verbunden, in welchem ein oder mehrere Kennfelder abgelegt sein können, die die Rußreaktivität RR des im Partikelfilter 3 abgelagerten Rußes in Abhängigkeit von unterschiedlichen Motorbetriebsbereichen der Brennkraftmaschine 1 angeben.

Die Steuerung 4 kann zur Einleitung einer Regenerationsphase über eine unterbrochene Steuerleitung 6 eine Kraftstoffzufuhr in den Abgasstrom veranlassen, wobei die Kraftstoffzufuhr so gewählt wird, dass eine gewünschte Temperaturerhöhung im Abgasstrom erreicht wird. Den Zeitpunkt und die Menge des zugeführten Kraftstoffs ermittelt die Steuerung 4 anhand wenigstens eines Kennfeldes, welches im Kennfeldspeicher 5 abgespeichert ist.

Zusätzlich besteht die Möglichkeit, dass die Steuerung 4 die Brennkraftmaschine 1 gezielt so einstellt, dass im Abgasstrom Ruß mit hoher Reaktivität zum Partikelfilter 3 gelangt. Dies kann zur Unterstützung der Einleitung und Durchführung einer Regenerationsphase unterstützend beitragen.

**Patentansprüche**

1. Verfahren zur Regeneration eines Partikelfilters (PF) einer Brennkraftmaschine (1), bei dem während wiederkehrender Regenerationsphasen eine Regeneration durch Abbrennen der im Partikelfilter (PF) abgelagerten Rußpartikeln erfolgt, **dadurch gekennzeichnet, dass** während des Betriebs der Brennkraftmaschine (1) die Rußreaktivität (RR) der Rußablagerungen anhand eines Kennfeldes bestimmt wird, wobei die Rußmenge und die Rußreaktivität (RR) des im Partikelfilter (PF) abgelagerten Rußes bestimmt werden und dass daraus

   - der Zeitpunkt für eine Regenerationsphase festgelegt wird sowie
   - eine Prozesstemperatur für die Regenerationsphase festgelegt wird.

2. Verfahren nach Anspruch 1, **dadurch gekennzeichnet, dass** zur Erstellung des Kennfeldes an einem Motorprüfstand die Brennkraftmaschine (19) in unterschiedlichen Motorbetriebsbereichen betrieben wird, dass zu den unterschiedlichen Motorbetriebsbereichen die Rußreaktivität (RR) für jeden Motorbetriebsbereich ermittelt und in einem Kennfeld in Abhängigkeit von unterschiedlichen Motorbetriebsbereichen abgelegt wird.

3. Verfahren nach einem der Ansprüche 1 oder 2, **dadurch gekennzeichnet, dass** während des Betriebs der Brennkraftmaschine (1) die Rußreaktivität (RR) der Rußablagerungen anhand eines zuvor empirisch für unterschiedliche Motorbetriebsbereiche der Brennkraftmaschine (1) ermittelten Kennfeldes bestimmt wird.

4. Verfahren nach einem der vorhergehenden Ansprüche, **dadurch gekennzeichnet, dass** bei einem teilgefüllten Partikelfilter (PF) mit einem definiert vorgegebenen Anteil an reaktivem oder hochreaktivem Ruß eine Regeneration bei einer definiert vorgegebenen niedrigen Abgastemperatur, bevorzugt bei einer niedrigen Abgastemperatur bis zu 450°C, höchst bevorzugt bei einer niedrigen Abgastemperatur von 250°C bis 450°C, durchgeführt wird.

5. Verfahren nach einem der Ansprüche 1 bis 3, **dadurch gekennzeichnet, dass** bei einem vollgefüllten Partikelfilter (PF) mit Ruß schwacher oder niedriger Rußreaktivität (RR) eine Regeneration bei einer definiert vorgegebenen hohen Abgastemperatur, bevorzugt bei einer hohen Abgastemperatur von größer 450°C, höchst bevorzugt bei einer hohen Abgastemperatur von 450°C bis 600°C, durchgeführt wird.

6. Verfahren nach einem der Ansprüche 1 bis 3, **dadurch gekennzeichnet, dass** bei einem vollgefüllten Partikelfilter (PF) mit reaktivem Ruß oder Ruß hoher Rußreaktivität (RR) eine Regeneration bei einer definiert vorgegebenen niedrigen Abgastemperatur, bevorzugt bei einer niedrigen Abgastemperatur bis zu 450°C, höchst bevorzugt bei einer niedrigen Abgastemperatur von 250°C bis 450°C, durchgeführt wird.

7. Verfahren nach einem der vorhergehenden Ansprüche, **dadurch gekennzeichnet, dass** die Prozesstemperatur durch eine gezielte Kraftstoffzufuhr in den Abgasstrom vor einem Dieseloxidationskatalysator (2) gesteuert wird.

8. Verfahren nach einem der vorhergehenden Ansprüche, **dadurch gekennzeichnet, dass** während zusätzlicher Beeinflussungsphasen ein gezielter Rußeintrag mit Ruß hoher Rußaktivität (RR) in den Partikelfilter (PF) erfolgt.

9. Brennkraftmaschine mit einem Partikelfilter (PF), in welchem Rußpartikel aus dem Abgasstrom der Brennkraftmaschine (1) abgelagert werden, mit einer Steuerung, die zur Durchführung des Verfahrens nach einem der vorhergehenden Ansprüche konfiguriert ist, **dadurch gekennzeichnet, dass** die Steuerung (4) den Rußeintrag in den Partikelfilter (PF, 3) überwacht, dass die Steuerung (4) mit einem Kennfeldspeicher (5), in dem ein die Rußreaktivität (RR) des im Partikelfilter (PF) eingelagerten Rußes kennzeichnendes Kennfeld abgelegt ist, verbunden ist, und dass die Steuerung (4) den Zeitpunkt und die Abgastemperatur für eine durchzuführende Regenerationsphase bestimmt.

10. Brennkraftmaschine nach Anspruch 9, **dadurch gekennzeichnet, dass** innerhalb einer Beeinflussungsphase die Steuerung (4) den Betrieb der Brennkraftmaschine (1) zur Bildung und Ablagerung von Ruß im Partikelfilter (PF) mit hoher Rußreaktivität (RR) einstellt.

11. Kraftfahrzeug, insbesondere Nutzfahrzeug, mit einer Brennkraftmaschine nach Anspruch 9 oder 10.

**Claims**

1. Method for the regeneration of a particle filter (PF) of an internal combustion engine (1), in which method, during periodic regeneration phases, a regeneration is performed by virtue of the soot particles that have been deposited in the particle filter (PF) being burned off, **characterized in that**, during the operation of the internal combustion engine (1), the soot reactivity (SR) of the soot deposits is determined on the basis of a characteristic map, wherein the soot amount and the soot reactivity (SR) of the soot deposited in the particle filter (PF) are determined, and **in that**

   - the time for a regeneration phase is defined from these and
   - a process temperature for the regeneration phase is defined from these.

2. Method according to Claim 1, **characterized in that**, to establish the characteristic map, on an engine test stand, the internal combustion engine (19) is operated in different engine operating ranges, and **in that**, in the different engine operating ranges, the soot reactivity (SR) for each engine operating range is determined and stored in a characteristic map as a function of different engine operating ranges.

3. Method according to either of Claims 1 and 2, **characterized in that**, during the operation of the internal combustion engine (1), the soot reactivity (SR) of the soot deposits is determined on the basis of a characteristic map previously established empirically for different engine operating ranges of the internal combustion engine (1).

4. Method according to one of the preceding claims, **characterized in that**, in the case of a partially filled particle filter (PF) with a definedly predetermined fraction of reactive or highly reactive soot, a regeneration is performed at a definedly predetermined low exhaust-gas temperature, preferably at a low exhaust-gas temperature of up to 450°C, most preferably at a low exhaust-gas temperature of 250°C to 450°C.

5. Method according to one of Claims 1 to 3, **characterized in that**, in the case of a fully filled particle filter (PF) with soot of slight or low soot reactivity (SR), a regeneration is performed at a definedly predetermined high exhaust-gas temperature, preferably at a high exhaust-gas temperature of greater than 450°C, most preferably at a high exhaust-gas temperature of 450°C to 600°C.

6. Method according to one of Claims 1 to 3, **characterized in that**, in the case of a fully filled particle filter (PF) with reactive soot or soot of high soot reactivity (SR), a regeneration is performed at a definedly predetermined low exhaust-gas temperature, preferably at a low exhaust-gas temperature of up to 450°C, most preferably at a low exhaust-gas temperature of 250°C to 450°C.

7. Method according to one of the preceding claims, **characterized in that** the process temperature is controlled by means of a targeted supply of fuel into the exhaust-gas flow upstream of a diesel oxidation catalytic converter (2).

8. Method according to one of the preceding claims, **characterized in that**, during additional manipulation phases, soot of high soot activity (SR) is introduced in a targeted manner into the particle filter (PF).

9. Internal combustion engine having a particle filter (PF), in which soot particles from the exhaust-gas flow of the internal combustion engine (1) are deposited, having a controller which is configured for carrying out the method according to one of the preceding claims, **characterized in that** the controller (4) monitors the introduction of soot into the particle filter (PF, 3), **in that** the controller (4) is connected to a characteristic map memory (5) in which there is stored a characteristic map which characterizes the soot reactivity (SR) of the soot deposited in the particle filter (PF), and **in that** the controller (4) determines the time and the exhaust-gas temperature for a regeneration phase to be performed.

10. Internal combustion engine according to Claim 9, **characterized in that**, within a manipulation phase, the controller (4) adjusts the operation of the internal combustion engine (1) such that soot of high soot reactivity (SR) is formed and deposited in the particle filter (PF).

11. Motor vehicle, in particular utility vehicle, having an internal combustion engine according to Claim 9 or 10.

**Revendications**

1. Procédé de régénération d'un filtre à particules (PF) d'un moteur à combustion interne (1), dans lequel, pendant des phases de régénération récurrentes, une régénération se produit par combustion des particules de suie accumulées dans le filtre à particules (PF), **caractérisé en ce que** pendant le fonctionnement du moteur à combustion interne (1), la réactivité de la suie (RR) des dépôts de suie est déterminée à l'aide d'un champ caractéristique, la quantité de suie et la réactivité de la suie (RR) de la suie accumulée dans le filtre à particules (PF) étant déterminées et **en ce que** l'on en déduit

   - l'instant d'une phase de régénération ainsi
   - qu'une température de processus pour la phase de régénération.

2. Procédé selon la revendication 1, **caractérisé en ce que** pour créer le champ caractéristique sur un banc d'essai de moteur, le moteur à combustion interne (19) est mis en fonctionnement dans des plages de fonctionnement du moteur différentes, **en ce qu'**aux différentes plages de fonctionnement du moteur, la réactivité de la suie (RR) est déterminée pour chaque plage de fonctionnement du moteur et est consignée dans un champ caractéristique en fonction de différentes plages de fonctionnement du moteur.

3. Procédé selon l'une quelconque des revendications 1 ou 2, **caractérisé en ce que** pendant le fonctionnement du moteur à combustion interne (1), la réactivité de la suie (RR) des dépôts de suie est déterminée à l'aide d'un champ caractéristique déterminé préalablement empiriquement pour différentes plages de fonctionnement de moteur du moteur à combustion interne (1).

4. Procédé selon l'une quelconque des revendications précédentes, **caractérisé en ce que** dans le cas d'un filtre à particules (PF) partiellement rempli avec une certaine proportion prédéfinie de suie réactive ou de suie hautement réactive, on effectue une régénération à une certaine température de gaz d'échappement basse prédéfinie, de préférence à une température de gaz d'échappement basse jusqu'à 450°C, le plus préférablement à une température de gaz d'échappement basse de 250°C à 450°C.

5. Procédé selon l'une quelconque des revendications 1 à 3, **caractérisé en ce que** dans le cas d'un filtre à particules (PF) complètement rempli avec de la suie à faible ou basse réactivité de suie (RR), on effectue une régénération à une certaine température de gaz d'échappement élevée prédéfinie, de préférence à une température de gaz d'échappement élevée supérieure à 450°C, le plus préférablement à une température de gaz d'échappement élevée de 450°C à 600°C.

6. Procédé selon l'une quelconque des revendications 1 à 3, **caractérisé en ce que** dans le cas d'un filtre à particules (PF) complètement rempli avec de la suie réactive ou de la suie à haute réactivité de suie (RR), on effectue une régénération à une certaine température de gaz d'échappement basse prédéfinie, de préférence à une température de gaz d'échappement basse jusqu'à 450°C, le plus préférablement à une température de gaz d'échappement basse de 250°C à 450°C.

7. Procédé selon l'une quelconque des revendications précédentes, **caractérisé en ce que** la température de processus est commandée par une alimentation en carburant ciblée dans le flux de gaz d'échappement avant un catalyseur d'oxydation diesel (2).

8. Procédé selon l'une quelconque des revendications précédentes, **caractérisé en ce que** pendant des phases d'influence supplémentaires, il se produit un apport de suie ciblée avec de la suie de haute activité de suie (RR) dans le filtre à particules (PF).

9. Moteur à combustion interne comprenant un filtre à particules (PF) dans lequel sont déposées des particules de suie provenant du flux de gaz d'échappement du moteur à combustion interne (1), comprenant une commande qui est configurée pour mettre en oeuvre le procédé selon l'une quelconque des revendications précédentes, **caractérisé en ce que** la commande (4) contrôle l'apport de suie dans le filtre à particules (PF, 3), **en ce que** la commande (4) est connectée à une mémoire de champ caractéristique (5), dans laquelle est consigné un champ caractéristique caractérisant la réactivité de la suie (RR) de la suie accumulée dans le filtre à particules (PF), et **en ce que** la commande (4) détermine l'instant et la température de gaz d'échappement pour une phase de régénération à effectuer.

10. Moteur à combustion interne selon la revendication 9, **caractérisé en ce qu'**à l'intérieur d'une phase d'influence, la commande (4) ajuste le fonctionnement du moteur à combustion interne (1) pour former et déposer de la suie dans le filtre à particules (PF) avec une haute réactivité de la suie (RR).

11. Véhicule automobile, en particulier véhicule utilitaire comprenant un moteur à combustion interne selon la revendication 9 ou 10.

Fig. 1

Fig. 2

Fig. 3

Fig.4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005046830 A1

**In der Beschreibung aufgeführte Nicht-Patentliteratur**

- **FEIBIG M.** Einflüsse motorischer Betriebsparameter auf die Reaktivität von Dieselruss. *MTZ- Motortechnische Zeitschrift,* 25. Juni 2010, vol. 71 (7-08/2010), 524-531